# EUROPEAN PATENT APPLICATION

(11) **EP 3 876 586 A1**
(43) Date of publication of application: **08.09.2021**
(21) Application number: 18939052.9
(22) Date of filing: 01.11.2018
(51) Int. Cl.: H04W 24/10

(54) **USER DEVICE AND BASE STATION DEVICE**

(71) Applicant: NTT DoCoMo, Inc., Tokyo 100-6150 (JP)
(72) Inventor: OHARA, Tomoya, Tokyo 100-6150 (JP)
(74) Representative: Hoffmann Eitle
(86) International application number: PCT/JP2018/040779
(87) International publication number: WO 2020/090098

(57) **Abstract**

A user device includes a receiving unit that receives, from a base station device, a measurement configuration including an event including a condition for transmitting a measurement report; a control unit that executes a measurement based on the measurement configuration; and a transmitting unit that transmits the measurement report to the base station device when the condition for transmitting the measurement report is satisfied, the transmission being based on a result of the executed measurement, wherein the control unit modifies a measurement method based on the result of the executed measurement.

## Description

### TECHNICAL FIELD

The present invention relates to a user device and a base station device in a radio communication system.

### BACKGROUND ART

In NR (New Radio) (which is also referred to as "5G") that is a successor system to Long Term Evolution (LTE), technology has been studied (e.g.,

Non-Patent Document 1) that meets the requirements, such as a requirement on a large capacity system, a requirement on a high data transmission rate, a requirement on low latency, a requirement on simultaneous connection of multiple terminals, a requirement on low cost, and a requirement on power saving.

In the NR, latency allowable between an occurrence of an event to be measured and transmission of a measurement report is specified as a requirement for the measurement of a user device (e.g., Non-Patent Document 2).

### Related Art Document

### [Non-Patent Document]

Non-Patent Document 1: 3GPP TS 38.300 V15.3.0(2018-09)
Non-Patent Document 2: 3GPP TS 38.133 V15.3.0(2018-09)

### SUMMARY OF THE INVENTION

### [PROBLEM TO BE SOLVED BY THE INVENTION]

In an NR radio communication system, a user device is to execute a measurement, so that a requirement specified in a technical specification document is satisfied. In this regard, an unnecessary measurement may occur, for example, when a communication environment greatly differs from a condition satisfying an event related to a measurement.

The present invention has been accomplished in view of the above-described point, and an object is to efficiently execute a measurement by a user device in a radio communication system.

### [MEANS FOR SOLVING THE PROBLEM]

According to the disclosed technology, there is provided a user device including a receiving unit that receives, from a base station device, a measurement configuration including an event including a condition for transmitting a measurement report; a control unit that executes a measurement based on the measurement configuration; and a transmitting unit that transmits the measurement report to the base station device when the condition for transmitting the measurement report is satisfied, the transmission being based on a result of the executed measurement, wherein the control unit modifies a measurement method based on the result of the executed measurement.

### [ADVANTAGE OF THE INVENTION]

According to the disclosed technology, in a radio communication system, a user device can efficiently perform measurements.

### BRIEF DESCRIPTION OF DRAWINGS

Fig. 1 is a diagram illustrating a radio communication system according to an embodiment of the present invention.
FIG. 2 is a sequence diagram illustrating an example of a measurement in an embodiment of the present invention.
FIG. 3 is a flowchart illustrating an example of a measurement in an embodiment of the present invention.
Fig. 4 is a diagram illustrating an example of a functional configuration of a base station device 10 according to an embodiment of the present invention.
Fig. 5 is a diagram illustrating an example of a functional configuration of a user device 20 according to an embodiment of the present invention.
FIG. 6 is a diagram illustrating an example of a hardware configuration of a base station device 10 or a user device 20 in an embodiment of the present invention.

### [EMBODIMENTS OF THE INVENTION]

The following embodiments of the present invention are described with reference to the drawings. Note that the embodiments described below are an example, and embodiments to which the present invention is applied are not limited to the following embodiments.

In an operation of a radio communication system of an embodiment of the present invention, existing technology is appropriately used. Here, the existing technology is, for example, existing LTE but is not limited to the existing LTE. Furthermore, the term "LTE" used in this specification has a broad meaning including LTE-Advanced and a system subsequent to LTE-Advanced (for example, NR), unless as otherwise specified.

In the embodiments of the present invention described below, terms used in the existing LTE are used, such as SS (Synchronization signal), PSS (Primary SS), SSS (Secondary SS), PBCH (Physical broadcast channel), PRACH (Physical random access channel), and the like. This is for convenience of description, and signals, functions, and the like, similar to these may be referred to by other names. The above-described terms in NR correspond to NR-SS, NR-PSS, NR-SSS, NR-PBCH, NR-PRACH, and the like. However, even if a signal is used for NR, the signal is not always specified as "NR-."

In the embodiments of the present invention, a duplex method may be a Time Division Duplex (TDD) method, a Frequency Division Duplex (FDD) method, or any other method (e.g., Flexible Duplex or the like).

In the following description, a method of transmitting a signal using a transmission beam may be digital beam forming of transmitting a signal multiplied by a pre-coding vector (pre-coded with a pre-coding vector) or may be analog beam forming for implementing beam forming using a variable phase shifter in a radio frequency (RF) circuit. Similarly, a method of receiving a signal using a reception beam may be digital beam forming of multiplying a received signal by a predetermined weight vector or may be analog beam forming of implementing beam forming using a variable phase shifter in a RF circuit. Hybrid beam forming in which digital beam forming and analog beam forming are combined may be applied to transmission and/or reception. Furthermore, transmitting a signal using a transmission beam may be transmitting a signal through a specific antenna port. Similarly, receiving a signal using a reception beam may be receiving a signal through a particular antenna port. An "antenna port" refers to a logical antenna port or a physical antenna port defined in the 3GPP standard. In addition, a precoding or the beam forming is also referred to as a "pre-coder," a "spatial domain filter," or the like.

A method of forming the transmission beam and the reception beam is not limited to the above-described methods. For example, in the base station device 10 or the user device 20 provided with a plurality of antennas, a method of changing an angle of each antenna may be used, a method in which a method using a precoding vector and a method of changing an angle of an antenna are combined may be used, a method of switching and using different antenna panels may be used, a method of using a combination of a plurality of antenna panels may be used, or any other method may be used. Furthermore, for example, a plurality of different transmission beams may be used in a high frequency band. Using a plurality of transmission beams is referred to as a multi-beam operation, and using a single transmission beam is referred to as a single beam operation.

In the embodiments of the present invention, "configuring" a radio parameter, or the like, may be "pre-configuring" a predetermined value, or configuring a radio parameter transmitted from a base station device 10 or a user device 20.

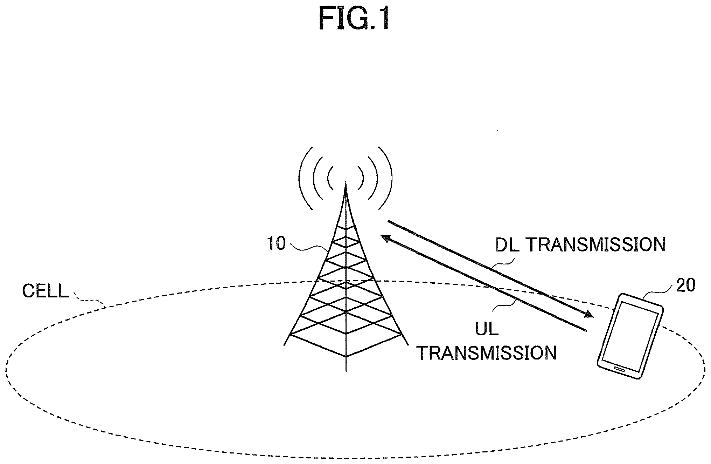

Fig. 1 is a diagram for illustrating a radio communication system according to an embodiment of the present invention. As illustrated in Fig. 1, the radio communication system according to the embodiment of the present invention includes the base station device 10 and the user device 20. In Fig. 1, one base station device 10 and one user device 20 are illustrated. However, this is an example, and there may be a plurality of base stations 10 and a plurality of user devices 20.

The base station device 10 provides one or more cells, and the base station device 10 is a communication device for performing radio communication with the user device 20. A physical resource of a radio signal may be defined in a time domain and a frequency domain, the time domain may be defined in terms of a number of OFDM symbols, and the frequency domain may be defined in terms of a number of subcarriers or a number of resource blocks. The base station device 10 transmits a synchronization signal and system information to the user device 20. The synchronization signal is, for example, NR-PSS and NR-SSS. The system information is transmitted, for example, on a NR-PBCH, and the system information is also referred to as broadcast information. As illustrated in Fig. 1, the base station device 10 transmits a control signal or data to the user device 20 on DL (Downlink), and the base station device 10 receives a control signal or data from the user device 20 on UL (Uplink). Each of the base station device 10 and the user device 20 can transmit and receive signals by performing beamforming.

The user device 20 is a communication device provided with a radio communication function, such as a smartphone, a cellular phone, a tablet, a wearable terminal, a communication module for M2M (Machine-to-Machine), etc. As illustrated in FIG. 1, the user device 20 utilizes various communication services provided by a radio communication system by receiving control signals or data in DL from the base station device 10 and transmitting control signals or data in UL to the base station device 10.

The user device 20 performs measurements to evaluate a communication condition. An event is specified by the base station device 10 to the user device 20 as a measurement configuration. The user device 20 transmits a measurement report to the base station device 10 when a condition on a measurement report configured by the event is satisfied.

It has been studied to modify a Radio resource management (RRM) measurement in order to reduce the power consumption of the user device 20. In the following, a modification of a measurement implies relaxing of a measurement, adapting a measurement, increasing a measurement, decreasing a measurement, limiting a measurement, and the like. For example, the user device 20 may reduce the number of times of RRM measurements on an SS/PBCH block (SS block) or a Channel State Information Reference Signal (CSI-RS) in a time domain in a serving cell and neighboring cells. For example, the user device 20 may reduce accuracy of an RRM measurement on an SS block or a CSI-RS. For example, the user device 20 may also reduce a number of cells to be measured or a number of frequencies of an neighboring cell to be measured, depending on a condition. For example, the conditions for relaxing the measurements are a channel state, a location of the user device 20, travel speed of the user device 20, and the like.

The relaxation of measurements has been studied to reduce the power consumption of the user device 20, particularly in an environment in which travel speed is low. In addition, it has been studied to reduce the power consumption of the user device 20 in an RRM measurement, such as a case in which multiple beams and multiple cells are involved, or a case in which an SS block and a SSB-based measurement timing configuration (SMTC) are shifted from a time interval during which Discontinuous reception (DRX) is ON.

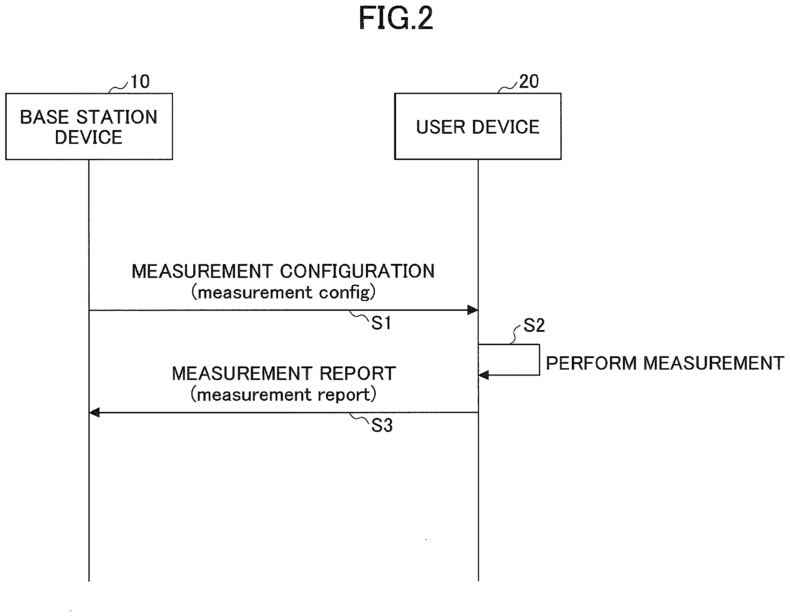

Fig. 2 is a sequence diagram for illustrating an example of a measurement in an embodiment of the present invention. As illustrated in Fig. 2, in an embodiment of the present invention, a measurement report is reported from the user device 20 to the base station device 10.

At step S1, the base station device 10 transmits information related to a measurement configuration to the user device 20. The information related to the measurement configuration includes an event. Subsequently, at step S2, the user device 20 executes a measurement based on the received information related to the measurement configuration. Subsequently, at step S3, in response to a condition related to a measurement result configured using the event being satisfied, the user device 20 transmits the measurement report to the base station device 10.

For example, an event represents a condition for transmitting a measurement report, such as "measured quality (RSRQ: Reference Signal Received Quality) becomes less than X dB," "measured quality of a cell A becomes greater than measured quality of a cell B by Y dB," or "measured quality of a frequency band A becomes greater than measured quality of a frequency band B by Z dB." The event can trigger a transmission of a measurement report upon detecting that the condition is satisfied. Furthermore, in order to prevent a ping-pong phenomenon such that frequent handover occurs between two cells, a hysteresis is provided as a parameter.

An NR technical specification document specifies an allowable delay time from an actual occurrence of an event to a transmission of a measurement report as a requirement on a measurement by the user device 20. That is, the user device 20 is to perform a measurement, so that an appropriate measurement result can be obtained at least within a period of an allowable delay time. Multiple samples may be required to obtain an appropriate measurement result. Accordingly, periodicity with which measurements are performed may be shorter than a period of the allowed delay time. The periodicity with which measurements are performed affects the power consumption of the user device 20. In order to obtain an appropriate measurement result, multiple measurement samples may be required.

The user device 20 is to perform a measurement so that a requirement specified in a technical specification document is met, regardless of event configuration details, a measurement result, terminal capability, or the like. However, for example, a measurement is required to be performed according to the specified requirement, even if a measurement result in the user device 20 greatly differs from a condition configured for an event, and it is unlikely that an environment changes to satisfy the condition configured for the event in a short time.

For example, when the user device 20 is executing measurements of two neighboring cells simultaneously as a candidate for a handover destination, if a measurement result of a cell A is within a predetermined value from a threshold value for transmitting a measurement report, and if a measurement result of a cell B differs from a threshold value for transmitting a measurement result by a value that is greater than or equal to a predetermined value, it is unlikely that the cell B will satisfy the threshold value for transmitting a measurement report in a short period of time. However, since all cells are measured by the user device 20, power may be consumed more than necessary. Accordingly, it is conceivable to reduce the power consumption of the user device 20 by solving a problem of consuming more power than necessary for a measurement.

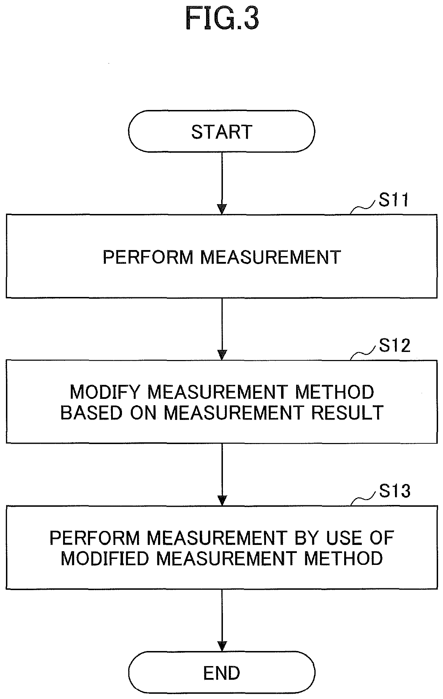

Fig. 3 is a flowchart for illustrating an example of a measurement in an embodiment of the present invention. At step S11, the user device 20 executes a measurement. Subsequently, the user device 20 modifies a measurement method based on a measurement result (S12). Subsequently, the user device 20 executes a measurement using the modified measurement method (S13).

In the modification of the measurement method at step S12, for example, the following may be modified: a number of cells to be measured, a number of frequency bands to be measured, a number of bands to be measured, a number of spatial reception parameters to be measured, a number of resources to be measured, a number of types of resources to be measured, a number of reference signals to be measured, a number of types of reference signals to be measured, a number of measurement objects for executing measurements, or a number of measurement configurations for executing measurements. The value of the number of modifications may be a value corresponding to a number of measurement objects or a number of measurement configurations. The modifications corresponding to the above-described number may be specified as a function in a technical specification document, or a related requirement may be modified or newly specified.

For a measurement, it may be determined whether to perform the measurement depending on a relative difference between a result of the measurement and a result of another measurement, or a frequency, a period, accuracy, and the like of the measurement may be modified. Namely, the user device 20 may determine whether the measurement is continued by comparing the result of the measurement and the result of the other measurement. The other measurement may be, for example, any one of a measurement of another cell, a measurement of another frequency band, a measurement of another band, a measurement of another beam, a measurement with another spatial reception parameter, a measurement on another resource, a measurement on another type of a resource, a measurement on another reference signal, another measurement object, and another measurement configuration, or a measurement other than these measurements. The result of the measurement or the result of the other measurement may include a difference value between the result of the measurement or the other measurement and a threshold value for transmitting a measurement result.

For a measurement, it may be determined whether to perform the measurement, depending on an absolute value of the result of the measurement or an absolute value of the result of another measurement, or a frequency, a period, accuracy, and the like of the measurement may be modified.

The measurement result may be signal strength (e.g., Reference Signal Received Power (RSRP) or the like), or signal quality (e.g., Reference Signal Received Quality (RSRQ), Signal to Interference plus Noise power Ratio (SINR), or the like).

Furthermore, a measurement result, a measurement frequency, a measurement period, or measurement accuracy may be specified for any layer. For example, a layer may be layer 1 or layer 3. Furthermore, a sample corresponding to a measurement result, a measurement frequency, a measurement period, or measurement accuracy may be a single sample or a sample obtained by filtering a plurality of samples.

A measurement result may also be based on a value of a single measurement or based on a change in a value of a measurement result in a time domain. For example, a measurement result may be determined based on whether the measurement result increases, based on whether the measurement result decreases, based on a degree of a change in the measurement result, or the like.

For example, a measurement method in step S12 may be modified, depending on travel speed of a UE, a UE type related to travel speed, UE capability, and/or UE mobility indicating a UE category. Furthermore, a measurement method in step S12 may be modified, for example, depending on a UE type, UE capability, a UE category, or the like, for a measurement, power consumption, or the like.

Furthermore, a measurement method may be modified depending on a number of measurements. For example, if a number of measurements is greater than a predetermined number, a certain measurement may be stopped or a measurement may be relaxed, based on a certain condition. Furthermore, for example, if a number of measurements is less than a predetermined number, a certain measurement may be started or a measurement may be adapted based on a certain condition. A number of measurements to modify a measurement method and details of the modification of the measurement method may be specified in a technical specification document or may be signalled from a base station. The number of measurements may be, for example, the number of cells to be measured, the number of frequency bands to be measured, the number of bands to be measured, the number of spatial reception parameters to be measured, the number of resources to be measured, the number of types of resources to be measured, the number of reference signals to be measured, the number of types of reference signals to be measured, the number of measurement objects for which measurements are to be executed, the number of measurement configurations with which measurements are to be executed, or the like.

A threshold value, a condition, a mode of an operation to be modified, a degree of modification, or the like for modifying the measurement method in step S12 may be specified in a technical specification document or indicated by the base station device 10. A threshold value or a condition for modifying a measurement method is a threshold value or a condition used for determining whether a measurement method is to be modified.

The indication may be transmitted from the base station device 10 through broadcast information or Radio Resource Control (RRC) signalling, or the indication may be transmitted together with a measurement configuration from the base station device 10.

For example, a part of the following 1)-4) or all of the following 1)-4) may be used in combination, as an example of elements, such as a threshold value, a condition, a mode of an operation to be modified, a degree of a modification, or the like for determining a modification of the measurement method in step S12.
1) A threshold value for modifying a measurement method
   1a) A difference value between a threshold value for triggering a transmission of a measurement report and a measurement result is less than or equal to X dB.
   1b) A difference value from a previous measurement result is greater than or equal to Y dB.
   1c) A difference value between (i) a difference value between a threshold value for triggering a transmission of a report of a measurement A and a measurement result; and (ii) a difference value between a threshold value for triggering a transmission of a report of a measurement B and a measurement result, is greater than or equal to Z dB.
2) A condition for modifying a measurement method
   2a) Whether a current measurement result increases from a previous measurement result.
   2b) Whether a current measurement result decreases from a previous measurement result.
3) A mode of an operation for modifying a measurement method
   3a) A measurement is stopped. For example, a measurement may be suspended for a predetermined time period, or a measurement may be suspended until an indication is received from the base station device 10.
   3b) A measurement is started.
   3c) A frequency of a measurement or accuracy of a measurement is relaxed or tightened.
4) A degree of modifying a measurement method
   A frequency of measurements is halved.

In the following, an example of a modification of the measurement method in step S12 is described.

The user device 20 is assumed to be simultaneously performing measurements of two neighboring cells, i.e., a cell A and a cell B, as candidates for a handover destination. A difference value between a measurement result of the cell A and a threshold value for triggering a transmission of a measurement result is assumed to be less than or equal to X dB, and a current measurement result is assumed to be increased from a previous measurement result. Furthermore, a difference value between a measurement result of the cell B and a threshold value for triggering a transmission of a measurement result is assumed to exceed X dB, and a current measurement result is assumed to be decreased from a previous measurement result.

If the measurement result of the cell A and the measurement result of the cell B are as described above, the user device 20 stops the measurement of the cell B, as a modification of the measurement method in step S12. Subsequently, upon detecting that a difference value between a measurement result of the cell A and a threshold value for triggering a transmission of a measurement result exceeds X dB, the user device 20 starts a measurement of the cell B, as a modification of the measurement method in step S12. Furthermore, as a value of X in the above-described example, a different value may be specified or signalled, as a different parameter.

According to the above-described embodiments, the user device 20 can modify a measurement method based on a measurement result, so that a less necessary measurement is omitted.

Namely, in a radio communication system, a user device can efficiently execute a measurement.

### (Device Configurations)

Next, examples of functional configurations of the base station device 10 and the user device 20 for executing the above-described processing and operation are described. The base station device 10 and the user device 20 include functions for executing the above-described embodiments. However, each of the base station device 10 and the user device 20 may instead provide only a part of the functions in the embodiments.

### <Base station device 10>

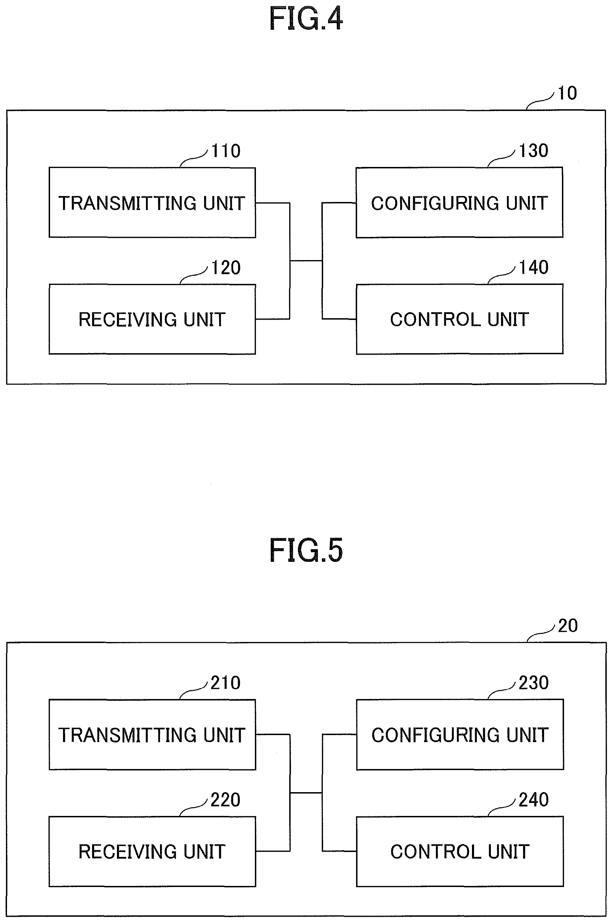

Fig. 4 is a diagram illustrating an example of a functional configuration of the base station device 10. As illustrated in Fig. 4, the base station device 10 includes a transmitting unit 110; a receiving unit 120; a configuring unit 130; and a control unit 140. The functional configuration illustrated in Fig. 4 is merely an example. Functional division and names of functional units may be any division and names, provided that operation according to the embodiments of the present invention can be executed.

The transmitting unit 110 includes a function for generating a signal to be transmitted to the user device 20 and transmitting the signal through radio. The receiving unit 120 includes a function for receiving various signals transmitted from the user device 20 and retrieving, for example, information of a higher layer from the received signals. The transmitting unit 110 has a function to transmit NR-PSS, NR-SSS, NR-PBCH, DL/UL control signals, and the like, to the user device 20.

The configuring unit 130 stores preconfigured configuration information and various types of configuration information to be transmitted to the user device 20 in a storage device and reads the configuration information from the storage device if necessary. For example, content of the configuration information is, for example, information on a measurement of the user device 20, and the like.

As described in the embodiments, the control unit 140 performs a process of generating a configuration of a measurement by the user device 20. Furthermore, the control unit 140 performs communication control based on a measurement report obtained from the user device 20. A functional unit related to signal transmission in the control unit 140 may be included in the transmitting unit 110, and a functional unit related to signal reception in the control unit 140 may be included in the receiving unit 120.

### <User device 20>

Fig. 5 is a diagram illustrating an example of a functional configuration of the user device 20. As illustrated in Fig. 5, the user device 20 has a transmitting unit 210, a receiving unit 220, a configuring unit 230, and a control unit 240. The functional configuration illustrated in Fig. 5 is merely an example. Functional division and names of functional units may be anything, provided that operation according to the embodiments of the present invention can be executed.

The transmitting unit 210 generates a transmission signal from transmission data and transmits the transmission signal through radio. The receiving unit 220 receives various types of signals through radio, and retrieves a signal of a higher layer from a received signal of a physical layer. The receiving unit 220 also has a function of receiving the NR-PSS, the NR-SSS, the NR-PBCH, the DL/UL/SL control signals, or the like transmitted from the base station device 10. Furthermore, for example, the transmitting unit 210 may transmit a physical sidelink control channel (PSCCH), a physical sidelink shared channel (PSSCH), a physical sidelink discovery channel (PSDCH), a physical sidelink broadcast channel (PSBCH), and the like to another user device 20 as the D2D communication, and the receiving unit 120 receives the PSCCH, the PSSCH, the PSDCH, the PSBCH, and the like from another user device 20.

The configuring unit 230 stores various types of configuration information received from the base station device 10 or the user device 20 through the receiving unit 220 in the storage device and reads the configuration information from the storage device if necessary. The configuring unit 230 also stores pre-configured configuration information. For example, content of the configuration information is information on measurement by the user device 20 or the like.

The control unit 240 performs measurement based on the configuration on measurement obtained from the base station device 10. Furthermore, the control unit 240 reports a measurement report to the base station device 10. A functional unit related to signal transmission in the control unit 240 may be included in the transmitting unit 210, and a functional unit related to signal reception in the control unit 240 may be included in the receiving unit 220.

### <Hardware configuration>

The block diagrams (FIG. 4 and FIG. 5) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire, radio, or the like) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

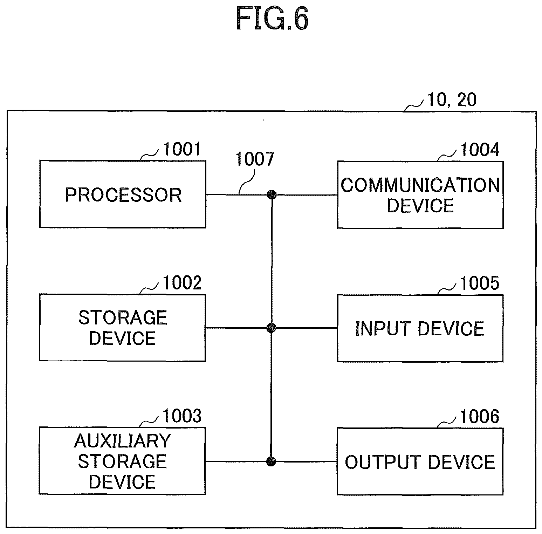

For example, the base station device 10, the user device 20, or the like in an embodiment of the present invention may function as a computer for performing a process of radio communication method according to the present disclosure. Fig. 6 is a diagram illustrating an example of a hardware configuration of the base station device 10 and the user device 20 according to an embodiment of the present disclosure. Each of the base station device 10 and the user device 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be read as a circuit, device, unit, or the like. The hardware configuration of each of the base station device 10 and the user device 20 may be configured to include each device depicted, or may be configured without including some devices.

Each function in each of the base station device 10 and the user device 20 is implemented such that predetermined software (program) is read on hardware such as the processor 1001, the storage device 1002 and the like, and the processor 1001 performs an operation and controls communication by the communication device 1004 and at least one of reading and writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like. For example, the above-described control unit 140, the control unit 240, and the like may be implemented by the processor 1001.

Furthermore, the processor 1001 reads a program (program code), a software module, data, or the like from at least one of the auxiliary storage device 1003 and the communication device 1004 out to the storage device 1002, and executes various types of processes according to them. A program causing a computer to execute at least some of the operations described in the above embodiments is used as the program. For example, the control unit 140 of the base station device 10 illustrated in FIG. 4 may be implemented by a control program which is stored in the storage device 1002 and operates on the processor 1001. Furthermore, for example, the control unit 240 of the user device 20 illustrated in Fig. 5 may be implemented by a control program which is stored in the storage device 1002 and operates on the processor 1001. Various types of processes are described to be executed by one processor 1001 but may be executed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The auxiliary storage device 1003 is also referred to as an "auxiliary storage device." The above-described storage medium may be, for example, a database, a server, or any other appropriate medium including at least one of the storage device 1002 and the auxiliary storage device 1003.

The communication device 1004 is hardware (a transmitting and receiving device) for performing communication between computers via at least one of a wired network and a wireless network and is also referred to as a "network device," a "network controller," a "network card," a "communication module," or the like. The communication device 1004 may be configured to include a high frequency switch, a duplexer, a filter, a frequency synthesizer, and the like to implement at least one of frequency division duplex (FDD) and time division duplex(TDD). For example, transmitting and receiving antennas, an amplifier, a transceiver, a transmission line interface, and the like may be implemented by the communication device 1004. The transceiver may be implemented such that a transmitter and a receiver are physically or logically separated.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The devices such as the processor 1001 and the storage device 1002 are connected by the bus 1007 to communicate information with each other.

The bus 1007 may be configured with a single bus or may be configured with different buses between the devices.

Furthermore, the base station device 10 or the user device 20 may be configured to include hardware such as a microprocessor, a digital signal processor (DSP), an application specific integrated circuit (ASIC), a programmable logic device (PLD), or a field programmable gate array (FPGA), or all or some of the functional blocks may be implemented by hardware. For example, the processor 1001 may be implemented by at least one of these pieces of hardware.

### (Conclusion of the embodiments)

As described above, according to the embodiments of the present invention, there is provided a user device including a receiving unit that receives, from a base station device, a measurement configuration including an event including a condition for transmitting a measurement report; a control unit that executes a measurement based on the measurement configuration; and a transmitting unit that transmits the measurement report to the base station device when the condition for transmitting the measurement report is satisfied, the transmission being based on a result of the executed measurement, wherein the control unit modifies a measurement method based on the result of the executed measurement.

According to the above-described configuration, the user device 20 can modify a measurement method based on a measurement result, so that a less necessary measurement is omitted. Namely, in a radio communication system, a user device can efficiently execute a measurement.

The control unit may modify, based on the result of the executed measurement, a number of cells to be measured, a number of frequency bands to be measured, a number of bands to be measured, a number of spatial reception parameters to be measured, a number of resources to be measured, a number of types of the resources to be measured, a number of reference signals to be measured, a number of types of the reference signals to be measured, a number of measurement objects to be measured, or a number of measurement configurations to be measured, or a combination thereof. According to this configuration, the user device 20 can modify a measurement method based on a measurement result, so that a less necessary measurement is omitted.

The control unit may determine whether the executed measurement is to be continued by comparing the result of the executed measurement with a result of another measurement. According to this configuration, the user device 20 can modify a measurement method based on a measurement result, so that a less necessary measurement is omitted.

The control unit may stop the another measurement upon detecting that a difference value between the result of the executed measurement and a threshold value for triggering a transmission of the measurement report is less than or equal to a predetermined value and a difference value between the result of the another measurement and the threshold value for triggering the transmission of the measurement report exceeds the predetermined value. According to this configuration, the user device 20 can modify a measurement method based on a measurement result, so that a less necessary measurement is omitted.

After the another measurement is stopped, upon detecting that the difference value between the result of the executed measurement and the threshold value for triggering the transmission of the measurement report exceeds the predetermined value, the control unit may restart the another measurement. According to this configuration, after omitting a less necessary measurement based on a measurement result, the user device 20 can restart the measurement depending on a communication condition.

As described above, according to the embodiments of the present invention, there is provided a base station device including a transmitting unit that transmits, to a user device, a measurement configuration including an event for configuring a condition for transmitting a measurement report; and a receiving unit that receives, from the user device, the measurement report based on a result of a measurement executed based on the measurement configuration, wherein the measurement configuration includes information for modifying a measurement method based on the result of the executed measurement.

According to the above-described configuration, the user device 20 can modify a measurement method based on a measurement result, so that a less necessary measurement is omitted. Namely, in a radio communication system, a user device can efficiently execute a measurement.

### (Supplemental embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (unless inconsistent).

The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station device 10 and the user device 20 are described using the functional block diagrams, but such devices may be implemented by hardware, software, or a combination thereof. Software executed by the processor included in the base station device 10 according to the embodiment of the present invention and software executed by the processor included in the user device 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any other appropriate storage medium.

Furthermore, a notification of information is not limited to the aspect or embodiment described in the present disclosure and may be provided by any other method. For example, the notification of information may be given by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an RRC message and may be, for example, an RRC connection setup message, an RRC connection reconfiguration message, or the like.

Each aspect and embodiment described in the present disclosure may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), NR (new Radio), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The processing procedures, the sequences, the flowcharts, and the like of the respective aspects/embodiments described in this specification may be reversed in order provided that there is no contradiction. For example, the method described in the present disclosure presents elements of various steps with an exemplary order and is not limited to a presented specific order.

In this specification, a specific operation to be performed by the base station device 10 may be performed by an upper node in some cases. In the network including one or more network nodes including the base station device 10, various operations performed for communication with the user device 20 can be obviously performed by at least one of the base station device 10 and any network node (for example, an MME, an S-GW, or the like is considered, but it is not limited thereto) other than the base station device 10. A case is exemplified above in which there is one network node other than the base station device 10. The one network node may be a combination of a plurality of other network nodes (e.g., MME and S-GW).

Information, a signal, or the like described in the present disclosure may be output from a higher layer (or a lower layer) to a lower layer (or a higher layer layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination in the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

Information, signals, and the like described in the present disclosure may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or any combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC) may be referred to as a "carrier frequency," a "cell," or the like.

The terms "system" and "network" used in the present disclosure are used interchangeably.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names assigned to the various channels and the information elements are not limited in any respect.

In the present disclosure, the terms "base station (BS)," "radio base station," "base station device," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base stations may also be indicated by terms such as a macrocell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device which need not necessarily move during a communication operation. For example, at least one of the base station and the mobile station may be an Internet of things (IoT) device such as a sensor.

Further, the base station in the present disclosure may be replaced with a user terminal. For example, each aspect/embodiment of the present disclosure may be applied to a configuration in which communication between the base station and the user terminal is replaced with communication between a plurality of units of user device 20 (for example, which may be referred to as device-to-device (D2D) or vehicle-to-everything (V2X)). In this case, the user device 20 may have the functions of the base station device 10 described above. Further, the terms "uplink" and "downlink" may be replaced with terms (for example, "side") corresponding to inter-terminal communication. For example, an uplink channel, a downlink channel, or the like may be replaced with side channels.

Similarly, the user terminal in the present disclosure may be replaced with the base station. In this case, the base station may have the functions of the above-mentioned user terminal.

The term "determining" used in the present disclosure may include a wide variety of actions. For example, "determining" may include, for example, events in which events such as judging, calculating, computing, processing, deriving, investigating, looking up, search, and inquiry (for example, looking up in a table, a database, or another data structure), or ascertaining are regarded as "determining." Further, "determining" may include, for example, events in which events such as receiving (for example, receiving information), transmitting (for example, transmitting information), input, output, or accessing (for example, accessing data in a memory) are regarded as "determining." Further, "determining" may include, for example, events in which events such as resolving, selecting, choosing, establishing, or comparing are regarded as "determining." In other words, "determining" may include events in which a certain operation is regarded as "determining." Further, "determining" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case in which used in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS and may be referred to as a pilot, depending on a standard to be applied.

A phrase "based on" used in the present disclosure is not limited to "based only on" unless otherwise stated. In other words, a phrase "based on" means both "based only on" and "based on at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Further, "means" in the configuration of each of the above devices may be replaced with "unit," "circuit," "device," or the like.

When "include," "including," and variations thereof are used in the present disclosure, these terms are intended to be comprehensive, similar to a term "provided with (comprising)." Further, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

The numerology may be a communication parameter applied to at least one of transmission and reception of a certain signal or channel. For example, the numerology may indicate at least one of a subcarrier spacing (SCS), a bandwidth, a symbol length, a cyclic prefix length, a transmission time interval (TTI), a number of symbols per TTI, a radio frame configuration, a specific filtering process performed in the frequency domain by a transceiver, a specific windowing process performed in the time domain by a transceiver, and the like.

The slot may include one or more symbols (orthogonal frequency division multiplexing (OFDM) symbols, single carrier frequency division multiple access (SC-FDMA) symbols, or the like) in the time domain. The slot may be a time unit based on the numerology.

The slot may include a plurality of mini slots. Each mini slot may include one or more symbols in the time domain. Further, the mini slot may be referred to as a sub-slot. The mini slot may include fewer symbols than a slot. A PDSCH (or PUSCH) transmitted in units of times greater than the mini slot may be referred to as a PDSCH (or PUSCH) mapping type A. A PDSCH (or PUSCH) transmitted using a mini slot may be referred to as a PDSCH (or PUSCH) mapping type B.

All of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a transmission time interval (TTI: Transmission Time Interval), or a plurality of consecutive subframes may be referred to as TTIs, or one slot or one mini slot may be referred to as a TTI. In other words, at least one of the subframe and the TTI may be a subframe (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the subframe.

Here, for example, the TTI refers to a minimum time unit of scheduling in radio communication. For example, in the LTE system, the base station performs scheduling of allocating a radio resource (a frequency bandwidth, a transmission power, or the like which can be used in each user device 20) to each user device 20 in units of TTIs. The definition of the TTI is not limited thereto.

The TTI may be a transmission time unit such as a channel coded data packet (transport block), a code block, or a code word, or may be a processing unit such as scheduling or link adaptation. Further, when a TTI is provided, a time interval (for example, the number of symbols) in which a transport block, a code block, a code word, or the like is actually mapped may be shorter than the TTI.

Further, when one slot or one mini slot is referred to as a TTI, one or more TTIs (that is, one or more slots or one or more mini slots) may be a minimum time unit of scheduling. Further, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini slot, a sub slot, a slot, or the like.

Further, a long TTI (for example, a normal TTI, a subframe, or the like) may be replaced with a TTI having a time length exceeding 1 ms, and a short TTI (for example, a reduced TTI or the like) may be replaced with a TTI having a TTI length that is less than a TTI length of a long TTI and that is longer than or equal to 1 ms.

The resource block (RB) is a resource allocation unit in the time domain and the frequency domain and may include one or more consecutive subcarriers in the frequency domain. The number of subcarriers included in an RB may be the same irrespective of a numerology and may be, for example, 12. The number of subcarriers included in an RB may be determined based on a numerology.

Further, a time domain of an RB may include one or more symbols and may be a length of one slot, one mini slot, one subframe, or one TTI. One TTI, one subframe, or the like may be formed of one or more resource blocks.

Further, one or more RBs may be referred to as a physical resource block (PRB), a sub carrier group (SCG), a resource element group (REG), a PRB pair, an RB pair, or the like.

Further, the resource block may be formed of one or more resource elements (RE). For example, one RE may be a radio resource region of one subcarrier and one symbol.

A bandwidth part (BWP) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and the UE need not assume that predetermined signals/channels are transmitted and received outside an active BWP. Further, a "cell," a "carrier," or the like in the present disclosure may be replaced with a "BWP."

Structures of the radio frame, the sub frame, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, a symbol length, a cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, a term "A and B are different" may mean "A and B are different from each other." Further, the term may mean "each of A and B is different from C." Terms such as "separated," "coupled," or the like may also be interpreted similarly to "different."

Each aspect/embodiment described in the present disclosure may be used alone, in combination, or may be switched in accordance with the execution. Further, notification of predetermined information (for example, notification of "being X") is not limited to being performed explicitly, but may be performed by implicitly (for example, not notifying the predetermined information).

Although the present disclosure is described above in detail, it is obvious to those skilled in the art that the present disclosure is not limited to the embodiments described in the present disclosure. The present disclosure may be implemented as revised and modified embodiments without departing from the gist and scope of the present disclosure as set forth in claims. Accordingly, the description of the present disclosure is for the purpose of illustration and does not have any restrictive meaning to the present disclosure.

### LIST OF REFERENCE SYMBOLS

- 10: base station device
- 110: transmitting unit
- 120: receiving unit
- 130: configuring unit
- 140: control unit
- 20: user device
- 210: transmitting unit
- 220: receiving unit
- 230: configuring unit
- 240: control unit
- 1001: processor
- 1002: storage device
- 1003: auxiliary storage device
- 1004: communication device
- 1005: input device
- 1006: output device

## Claims

1. A user device comprising:
a receiving unit that receives, from a base station device, a measurement configuration including an event including a condition for transmitting a measurement report;
a control unit that executes a measurement based on the measurement configuration; and
a transmitting unit that transmits the measurement report to the base station device when the condition for transmitting the measurement report is satisfied, the transmission being based on a result of the executed measurement,
wherein the control unit modifies a measurement method based on the result of the executed measurement.

2. The user device of claim 1, wherein the control unit modifies, based on the result of the executed measurement, a number of cells to be measured, a number of frequency bands to be measured, a number of bands to be measured, a number of spatial reception parameters to be measured, a number of resources to be measured, a number of types of the resources to be measured, a number of reference signals to be measured, a number of types of the reference signals to be measured, a number of measurement objects to be measured, or a number of measurement configurations to be measured, or a combination thereof.

3. The user device of claim 1, wherein the control unit determines whether the executed measurement is to be continued by comparing the result of the executed measurement with a result of another measurement.

4. The user device of claim 3, wherein the control unit stops the another measurement upon detecting that a difference value between the result of the executed measurement and a threshold value for triggering a transmission of the measurement report is less than or equal to a predetermined value and a difference value between the result of the another measurement and the threshold value for triggering the transmission of the measurement report exceeds the predetermined value.

5. The user device of claim 4, wherein, after the another measurement is stopped, upon detecting that the difference value between the result of the executed measurement and the threshold value for triggering the transmission of the measurement report exceeds the predetermined value, the control unit restarts the another measurement.

6. A base station device comprising:
a transmitting unit that transmits, to a user device, a measurement configuration including an event for configuring a condition for transmitting a measurement report; and
a receiving unit that receives, from the user device, the measurement report based on a result of a measurement executed based on the measurement configuration,
wherein the measurement configuration includes information for modifying a measurement method based on the result of the executed measurement.
